# EUROPEAN PATENT APPLICATION

(11) **EP 4 026 852 A1**
(43) Date of publication of application: **13.07.2022**
(21) Application number: 21161581.0
(22) Date of filing: 09.03.2021
(51) Int. Cl.: C08B 3/10, C08L 1/10, C12P 19/04

(54) **PROCESS FOR THE PREPARATION OF BIOPLASTIC BASED ON CRYSTALLINE CELLULOSE NONANOATE**

(30) Priority: 12.01.2021 IT 202100000485
(71) Applicant: The Eyes Republic, la repubblica degli occhi S.r.l.s., 33170 Pordenone (IT)
(72) Inventor: Perazza, Roberto, 33170 Pordenone (IT); Vanin, Stefano, 33170 Pordenone (IT)
(74) Representative: Leganza, Alessandro

(57) **Abstract**

The present invention relates to the field of bioplastics, in particular, bioplastics from biomasses of esterified hemp cellulose and, even more particularly, the preparation of bioplastic based on crystalline cellulose nonanoate.

## Description

### Technical field

The present invention relates to the field of bioplastics, in particular, bioplastics from biomasses of esterified hemp cellulose and, even more particularly, the preparation of bioplastic based on crystalline cellulose nonanoate.

### Backgroud of the invention

Nowadays the need is felt to have available products of vegetable origin rather than those of fossil origin since oil, for example, is not an unlimited resource which is destined to run out, unlike products of vegetable origin that can be produced indefinitely. Many of the objects that surround us, such as the casing of telephones, glasses, bottles, etc. are made from fossil-based plastics, such as polyethylene, polypropylene, polyethylene terephthalate, etc.

In particular, it is essential in the modern world to replace fossil-based plastics with plant-based plastics. To this end, the cellulose that is extracted from plants and its derivatives, which have been industrially produced since tens and tens of years, can play a decisive role.

The cellulose derivatives of cotton, material of total non-EU import, are oppressed by countless problems, starting from the high residuals of pesticides and fungicides contained in its fibres, for example bisphenols, glyphosates, etc. The same applies to the forest cellulosic species on which the chemical industry bases its activities.

### Summary of the invention

The problem addressed by the present invention is therefore that of providing a process for the preparation of a cellulosic-based bioplastic which avoids the aforementioned problems and which can be usable for the production of objects such as telephones, glasses, bottles, etc.

Therefore, the present invention solves the aforementioned problem by means of the process of the present invention and the cellulose-based bioplastic obtainable from said process, as well as from the use and the objects that see it used as outlined in the attached claims, the definitions of which are an integral part of the present description, thus allowing to have an absolutely versatile bioplastic, for example for the production of a wide range of plastic objects for daily use.

Furthermore, as an additional advantage, the proposed solution involves the use of only raw materials of vegetable origin, therefore being an eco-sustainable solution.

Further features and advantages of the bioplastic of the invention and of the methods of use will result from the description of the examples of embodiment of the invention, provided as an indication of the invention.

### Detailed description of the invention

For the purposes of the description of this document, the term "and/or", when used in a listing of two or more items, means that any of the items listed can be used alone, or in any combination of two or more of the items listed.

For example, whether a combination is described as containing components A, B and/or C, or, A and/or B and/or C, the composition may contain only A; only B; only C; A and B in combination; A and C in combination; B and C in combination; or A, B and C in combination.

The terms "comprises", "comprising" or any other variation thereof, mean to cover a non-exclusive inclusion, such that a system, method, use, etc. which includes a list of elements, that does not include only those elements, but may include other elements not expressly listed or related to that system, method, use, etc.

An element followed by "comprises... a..." does not prevent, without further constraints, the existence of further identical elements in the system, method or use comprising the element.

An object of the present invention is a process for the preparation of bioplastic based on crystalline cellulose nonanoate comprising or, alternatively, consisting of the following steps:
a) preparing Cannabis Ruderalis fibres,
b) washing the fibres of step a) with hydrogen peroxide vapours and homogenizing them by means of centrifugation,
c) by means of a cryo-crushing process homogenizing the hemicellulose with the cellulose, obtaining a frozen crystalline paste,
d) bringing the crystalline paste prepared in step c) to room temperature and processing it with:
   - xylanase,
   - enzymes of glycogen and glucosaminic acids extracted from fungal hyphae of the genus Armillaria to give cellulose pulp;
e) undergoing the cellulose pulp of step d) to nanoreduction and simultaneous esterification with nonanoic acid by means of hyper-centrifugation, to give amorphous cellulose nonanoate,
f) adding sodium carbonate peroxide to the amorphous cellulose nonanoate of step e) and sonicating the mixture to give bioplastic based on crystalline cellulose nonanoate.

It has in fact been surprisingly found that the process of the present invention allows to prepare a bioplastic, i.e. a plastic prepared from completely natural ingredients, bioplastic which, due to its intrinsic characteristics, can be validly used for the manufacture of parts of telephones, glasses, and many other commonly used objects, replacing an infinity of synthetic plastics used for example in fashion, telephony, lighting, home automation, etc.

It was also found that the cellulose obtained from the cellulosic stems of the hemp plant is superior to that of the cotton plant for the preparation of bioplastic by means of the process of the invention.

Furthermore, unlike the cotton plant, hemp can thrive seasonally in non-dedicated, rotary, residual soils, with evident economic advantages, for example, by relaunching the bioeconomic value of hemp cultivation in the Alps, in a vision of territorial reconversion to the green economy.

The process of the present invention for the preparation of bioplastic based on crystalline cellulose nonanoate has a transformation yield of 98% of the starting organic material.

The bioplastic prepared with the process of the present invention allows to effectively replace many plastics of fossil origin, since it has the same values of the hardness characteristics and/or Young's modulus of plastics of fossil origin, thus allowing the creation of objects such as in the sector of fashion, telephony, lighting, home automation, etc.

Finally, said bioplastic, unlike plastics of fossil origin, is completely biodegradable.

The process of the invention allows the preparation of a bioplastic comprising crystalline cellulose nonanoate. Although, the actual chemical composition is that of cellulose nonanoate, i.e. ester of nonanoic acid with cellulose, the bioplastic of the invention can also be called cellulose acetate or cellulose mononacetate.

The set of steps a), b), c) and d) can be classified as homogenization phase; at the end of step d) cellulose pulp is obtained.

In particular, the Cannabis of the ruderalis and sativa varieties is decorticated and reduced to unitary fibres, preferably in a cutting mill.

The dry pulp is washed with hydrogen peroxide vapours and homogenized in a micro-extruder centrifuge and subsequently frozen in a cryo-crushing process intended to homogenize the hemicellulose and cellulose cells. Bringing the crystalline paste to room temperature, it is processed under hyperbaric pressure with the addition of xylanase, enzymes of glycogen and glucosamine acids, extracts of fungal hyphae of the genus Armillaria - which totally degrade the hemicellulose into primary cellulose. Thus, the cellulose pulp that was homogenized, it appears as a polymer gel, compressed and soapy, translucent, and porous.

The cellulose pulp, i.e. the cellulose polymer with the appearance of foam, undergoes two further steps comprising nanoreduction in fibres and natural acetylation, followed by sonication in the presence of sodium carbonate peroxide to give the bioplastic of the invention.

Step e) can also be called amorphous nanoreduction, in that it leads to cellulose nonanoate with particle sizes of the order of nanometres, in particular having an average particle diameter comprised in the range from 20 to 100 nanometres and providing an amorphous bioplastic, i.e. without of crystalline structure.

Step e) is preferably carried out by means of hyper-centrifugation in a baric chamber with pressure variation in the mass in masterbatch with nonanoic acid (geranum glandiflorum, extract) as acetylating agent and extrusion in nanophores.
Nonanoic acid is also called pelargonic acid.

Pressure variations up to 200 atmospheres in the chamber stretch the cellulose into nanofibres, so as to expose a large coupling surface for ions of nonanoic acid, particles with an average particulate diameter comprised from 20 to 100 nanometres.

The combination of cellulose acetylation by nonanoic acid and hyperbaric pressure provide a cellulose nonanoate centellinated in amorphous grains whose polymeric structure will be of elongated fibres with low stiffness, alternating with high stiffness fibres.

Step f) can be called crystalline nanoreduction.

In step f) the amorphous bioplastic is wetted with sodium carbonate peroxide, preferably at 5%, and inserted into an in-line sonoreactor, where the high-intensity ultrasonic cutting forces break the cellular structure of the pulp in order to make available the cellulose, exposed in its integral structure of crystalline regions and amorphous regions, with lengths of crystalline regions from 50 to 500 nanometres, with a diameter between 3 and 50nm. The cellulose molecule in fact has chains arranged in parallel to each other and are linked to each other by means of hydrogen bonds, very long chains that are difficult to dissolve and the use of high frequency ultrasound allows to break and functionalize them. The crystalline regions of hemp cellulose reach 90% of the mass and to stabilize them in extraction is possible thanks to the property of the carboxylic molecules of the inserted acids to bind to hydroxyl or carbonyl groups indifferently and to reform hydrogen carbon bridges at any point of the chain if regularly supplied with high kinetic energy.

The amorphous regions are dissolved, and the monomeric components homogenized to the crystalline regions. At the end of sonication, i.e. at the end of step f), the crystalline bioplastic based on cellulose nonanoate has the appearance of a flat or foliar sized, flakes, translucent, odourless powder.

In step f) sodium carbonate peroxide is used; alternatively, it is possible to use a potassium peroxide. Sodium carbonate peroxide, also called sodium percarbonate, is an adduct of sodium carbonate and hydrogen peroxide.

The bioplastic based on crystalline cellulose nonanoate obtainable from the process of the invention can be reduced into pellets, for further processing it, and has a melting temperature of 230°C, and is a bioplastic that combines high Young's modulus, high axial stiffness and tensile strength, with low density and low coefficient of thermal expansion.

According to a preferred embodiment of the process, step a) is carried out by means of decortication and reduction in fibres by means of a cutting mill of Cannabis Ruderalis.

According to a preferred embodiment of the process, step b) is carried out in a micro-extruder centrifuge.

In particular, in step c), by cryo-crushing, the Cellulose is homogenized with the hemicellulose and in step d), with the digestive process of the enzymes, i.e. with the addition of xylanase, enzymes of glycogen and glucosaminic acids - extracts of fungal hyphae of the genus Armillaria, the hemicellulose is totally degraded into primary cellulose.

In step d) the enzymes, in particular, xylanase and the enzymes of glycogen and glucosamine acids extracted of fungal hyphae of the genus Armillaria, totally degrade the hemicellulose into primary cellulose.

In particular, Armillaria Gallica and Armillaria Mellea are fungi with a kilometric extension of their root or hyphae system, present throughout the European area, the mellea is the local honey mushroom, and are only two of the countless species of Armillaria.

The xylanases are extracted from fresh hyphae and from the fungal base. The xylanases that are extracted from fresh hyphae contain proteins that have the ability to break down cells, in this case the cell walls of hemicellulose.

At the end of step d), thus the cellulose pulp that was homogenized, it appears as a polymer gel, compressed and soapy, translucent and porous.

According to a preferred embodiment of the process, the nanoreduction of step e) is carried out in a hyperbaric chamber with two pressurization cycles from 0 to 50 atmospheres for one hour and from 50 to 200 atmospheres for 20 minutes.

According to a more preferred embodiment of the process, the nanoreduction of step e) is carried out in a hyperbaric chamber with two pressurization cycles from 1 to 50 atmospheres for one hour and from 50 to 200 atmospheres for 20 minutes.

According to a preferred embodiment of the process, in step e) the esterification with nonanoic acid is carried out by adding geranum glandiflorum extract.

According to a preferred embodiment of the process, step e) further provides for extrusion in nanophores, i.e. extrusion through nanophores.

In step f) sodium carbonate peroxide is added to the amorphous cellulose nonanoate. According to a preferred embodiment, sodium carbonate peroxide at 5% is added to the amorphous cellulose nonanoate of step e).

According to a preferred embodiment of the process, step f) is carried out by means of an in-line sonoreactor.

Another object is therefore the bioplastic based on crystalline cellulose nonanoate obtainable according to the process of the present invention.

In particular, the bioplastic based on crystalline cellulose nonanoate has a melting point of 230°C.

Another object is an object comprising bioplastic based on crystalline cellulose nonanoate, as obtainable from the process of the present invention and/or having a melting point of 230°C.

Finally, a further object is the use of bioplastics based on crystalline cellulose nonanoate, as obtainable from the process of the present invention and/or having a melting point of 230°C, for the production of glasses, fashion goods, telephony, lighting, home automation.

From the above description, the advantages of the process and of the bioplastic of the present invention are evident, which, albeit in its relatively simple realization, simultaneously solves many problems, with one and only one preparation process.

## Claims

1. Process for the preparation of bioplastic based on crystalline cellulose nonanoate comprising or, alternatively, consisting of the following steps:
a) making available Cannabis Ruderalis fibres,
b) washing the fibres of step a) with hydrogen peroxide vapours and homogenizing them by means of centrifugation,
c) by means of a cryo-crushing process homogenizing the hemicellulose with the cellulose, obtaining a frozen crystalline paste,
d) bringing the crystalline paste prepared in step c) to room temperature and processing it with:
- xylanase,
- enzymes of glycogen and glucosaminic acids extracted from fungal hyphae of the genus Armillaria to give cellulose pulp;
e) undergoing the cellulose pulp of step d) to nanoreduction and simultaneous esterification with nonanoic acid by means of hyper-centrifugation, to give amorphous cellulose nonanoate,
f) adding sodium carbonate peroxide to the amorphous cellulose nonanoate of step e) and sonicating the mixture to give bioplastic based on crystalline cellulose nonanoate.

2. Process according to claim 1, wherein step b) is carried out in a micro-extruder centrifuge.

3. Process according to any one of claims 1 to 2, wherein the nanoreduction of step e) is carried out in a hyperbaric chamber with two pressurization cycles from 0 to 50 atmospheres for one hour and from 50 to 200 atmospheres for 20 minutes.

4. Process according to any one of claims 1 to 3, wherein in step e) the esterification with nonanoic acid is carried out by adding geranum glandiflorum extract.

5. Process according to any one of claims 1 to 4, wherein step e) further provides for extrusion in nanophores.

6. Process according to any one of claims 1 to 5, wherein step f) is carried out by means of an in-line sonoreactor.

7. Bioplastic based on crystalline cellulose nonanoate obtainable according to the process of any one of claims 1 to 6.

8. Bioplastic based on crystalline cellulose nonanoate having a melting point of 230°C.

9. Object comprising bioplastic based on crystalline cellulose nonanoate according to any one of claims 7 to 8.

10. Use of bioplastic based on crystalline cellulose nonanoate according to any one of claims 7 to 8 for the production of glasses, fashion goods, telephony, lighting, home automation.
